# EUROPEAN PATENT SPECIFICATION

(11) **EP 1 912 188 B1**
(45) Date of publication and mention of the grant of the patent: **14.09.2011**
(21) Application number: 07112409.3
(22) Date of filing: 13.07.2007
(51) Int. Cl.: G08B 13/196

(54) **Surveillance camera**
Überwachungskamera
Caméra de surveillance

(30) Priority: 10.10.2006 US 828829 P
(43) Date of publication of application: 16.04.2008
(73) Proprietor: Axis AB, 223 69 Lund (SE)
(72) Inventor: Bergström, Morten, SE-237 34 Bjärred (SE); Alm, Carl-Axel, 224 60 LUND (SE); Walter, Mathias, SE-232 31 Arlöv (SE)
(74) Representative: Åkesson, Sten Jan-Åke

(56) References cited:
- EP-A1- 1 381 002
- WO-A2-2004/036925
- JP-A- 2001 346 074
- JP-A- 2003 189 138
- JP-A- 2003 302 695
- US-A1- 2001 047 743

## Description

### Technical Field of the Invention

The present invention relates to a surveillance camera.

### Background of the Invention

Surveillance is desired in a lot of areas where space is limited. Many of those areas have limited room height, e.g. basements, busses, train carriages, subway cars, elevators, passages and corridors.

Usually surveillance cameras are not mounted in the ceiling because it increases the risk of people getting hurt or injured by the surveillance cameras, e.g. by hitting their heads on surveillance cameras. If the surveillance cameras are mounted in the ceiling anyway, they are recessed or flush mounted. However, in some environments it is not possible to recess cameras in the ceiling. The present invention is designed to solve these problems or at least to make these problems less evident.

US 2001/0047743 describes a multi-purpose security enclosure for security devices comprising a mounting base, a protective cover and a securement means.

EP 1381002 discloses a surveillance camera apparatus comprising a housing assembly having a slanted portion with an inner surface and a camera assembly accommodated in said housing assembly.

Document JP 2003 302695 discloses a surveillance camera featuring a spherical dome wherein the transparent view part cover is placed on one side. The camera features a movable unit inside the housing

Documents JP 2001346074 and JP2003189138 disclose similar housing assemblies to the ones explained above.

### Summary of the Invention

The scope of the invention is defined by the appended claims.

One object of the present invention is to provide an improved surveillance camera.

The object is achieved by means of a surveillance camera according to claim 1. Preferred embodiments of the invention are disclosed in the dependent claims.

In particular, according to the invention, the object is accomplished by means of a surveillance camera comprising a camera housing and a transparent view port cover, wherein the camera housing includes a top surface and a side surface, the side surface extends along a periphery of the top surface and is connected to the top surface, wherein the transparent view port cover is symmetrical arranged on the camera housing, is arranged to cover an opening in the camera housing, is curved, and is protruding over the top surface of the camera housing. One advantage of this embodiment is that it makes it possible to make a well protected surveillance camera of small height. It is possible to mount a camera of small height without tampering much with the surface to which the camera is to be attached to compared to the tampering that is necessary when mounting recessed cameras. The small height of the camera decreases the risk of someone getting injured by the camera when walking by.

According to the invention said opening in the camera housing is partly arranged in the top surface and partly in a portion of the side surface. This may provide an increased view angle without the need to increase the height of the surveillance camera.

According to the invention the transparent view port cover forms a part of a sphere.

According to the invention the asymmetric arrangement of the transparent view cover is achieved by arranging the transparent view cover at a distance from the centre of the camera housing in a plane projection viewed from the top surface side of the surveillance camera.

According to an embodiment the side surface extends from said top surface at an angle.

According to the invention the surveillance camera further comprises a lens and an image sensor, wherein the lens and the image sensor are arranged in the opening in the camera housing and are covered by the transparent view port cover.

According to another embodiment the surveillance camera further comprises a network connector, wherein the network connector is arranged within the camera housing, is arranged at a distance from said opening in the camera housing and in a plane essentially parallel with the top surface, and is covered by the camera housing.

According to the invention the surveillance camera further comprises a CPU (Central Processing Unit), a memory and power circuitry, wherein the CPU, the memory and the power circuitry are arranged within the camera housing at a distance from said opening in the camera housing and in a plane essentially parallel with the top surface, and are covered by the camera housing.

A further scope of applicability of the present invention will become apparent from the detailed description given below. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

Other features and advantages of the present invention will become apparent from the following detailed description of a presently preferred embodiment, with reference to the accompanying drawings, in which
Fig. 1a is a perspective view of one embodiment of the surveillance camera according to the present invention,
Fig. 1b is a top view of one embodiment of the surveillance camera according to the present invention,
Fig. 1c is a side view of one embodiment of the surveillance camera according to the present invention,
Fig. 1d is a front view of one embodiment of the surveillance camera according to the present invention,
Fig 2 is a bottom view of one embodiment of the surveillance camera according to the present invention,
Fig 3 shows the interior of the surveillance camera, i.e. the surveillance camera without a cover, according to the present invention, and
Fig 4 is a schematic view of the arrangement of functional parts of one embodiment of the surveillance camera according to the present invention.

### Detailed Description of an Embodiment

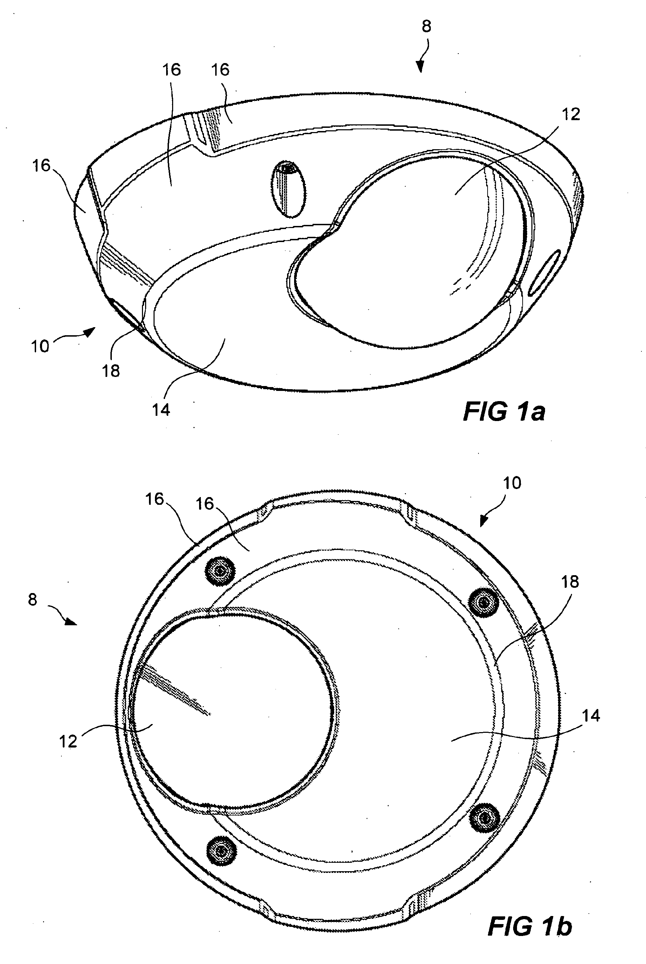

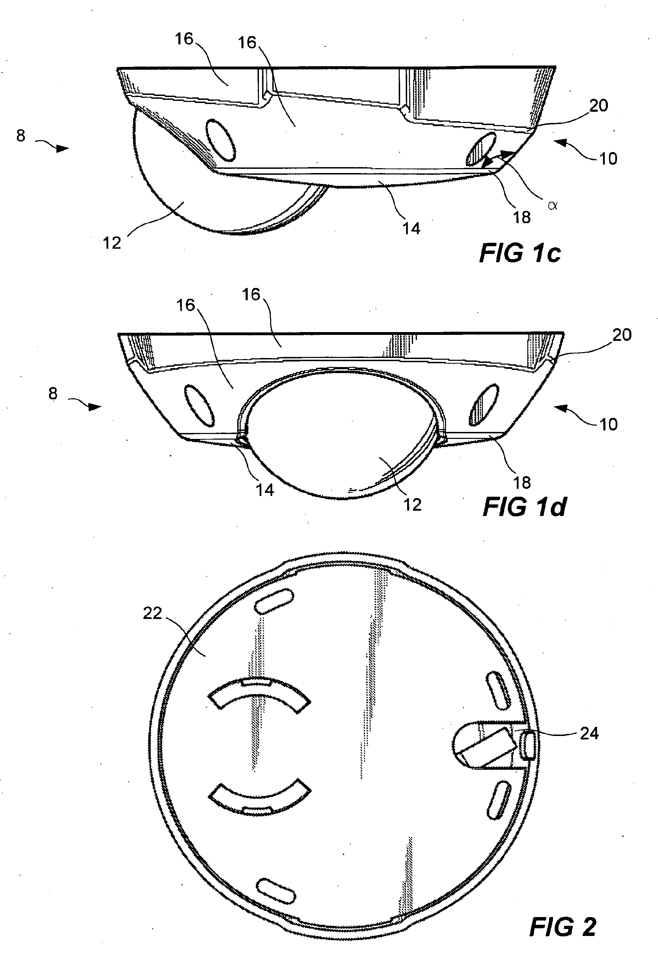

In Figs 1a-d a surveillance camera 8 is shown. The surveillance camera 8 includes a camera housing 10 and a transparent view port cover 12.

The camera housing 10 includes a substantially flat top surface 14 and a side surface 16. The side surface 16 extends along the periphery 18 of the top surface 14 and is connected to the top surface 14 along said periphery 18 of the top surface 14. Moreover, the side surface 16 extends from the top surface 14 at an angle α in relation to the top surface 14 in order to form the housing 10. The angle α may vary depending on the position along the periphery 18 of the top surface 14. According to one embodiment, α is larger than 90 degrees in order to provide smoother appearance and making the camera housing more resistant to violent handling or treatment, especially when mounted. Further, the side surface 16 may be further angled with respect to the top surface 14 at a distance from the periphery 18 of the top surface 14, see for example the additional angling of side surface 16 at position 20 in Fig 1c-d.

The transparent view port cover 12 covers an opening in the camera housing 10 and is arranged asymmetrically on the camera housing, i.e. it is arranged at a distance from the centre of the camera housing 10 in a plane projection viewed from the top surface 14 side of the surveillance camera 8.

According to one embodiment the opening in the camera housing 10 is arranged as a combination of an opening in the top surface 14 and an opening in the side surface 16.

Hence the opening is partly defined by an edge of the top surface 14 and partly defined by an edge of the side surface 16. Said edge of the top surface 14 may extend along a circular segment and said edge of the side surface 16 may extend along a circular segment. The combination of these two edges forms an opening in the camera housing 10.

As seen in Figs 1a-d the opening in the side surface 16 may be described as a notch in the camera housing 10. In this embodiment the view port cover 12 extends from the top surface 14 past the periphery 18 of the top surface 14 and to a position on the side surface 16 that is at a distance from the periphery 18 of the top surface 14.

By arranging the opening asymmetrically and by arranging the opening into the side surface 16 as well as the top surface 14, the surveillance camera 8 may be given a very small height at the same time as a large tilting angle is enabled. The possible tilting angle of the surveillance camera 8 of the embodiment shown in the figures is larger than 90 degrees.

According to the invention the transparent view port cover 12 is convexly curved and protruding over the top surface 14 of the camera housing 10. In the embodiment shown in Figs 1a-d this is achieved by forming the transparent view port cover 12 into a spherical shape, i.e. the transparent view port cover 12 is formed as a part of a sphere. According to another embodiment the convexly curved transparent view port cover 12 is formed as a cylindrical shape arranging the curved surface facing away from the camera housing 10, i.e. the transparent view port cover 12 is formed as a part of a cylinder.

The convexly curved shape of the transparent view port cover 12 has the advantage of being a robust protection of the camera parts below. Accordingly, the shape of the transparent view port cover 12 contributes to the protection of the surveillance camera 8 against attempts to tamper with it or vandalise it. Moreover, by providing a camera housing 10 and a transparent view port cover 12 which together cover the entire camera it is possible to seal the camera from the surrounding environment and thereby withstand high humidity, low temperature, dust, etc.

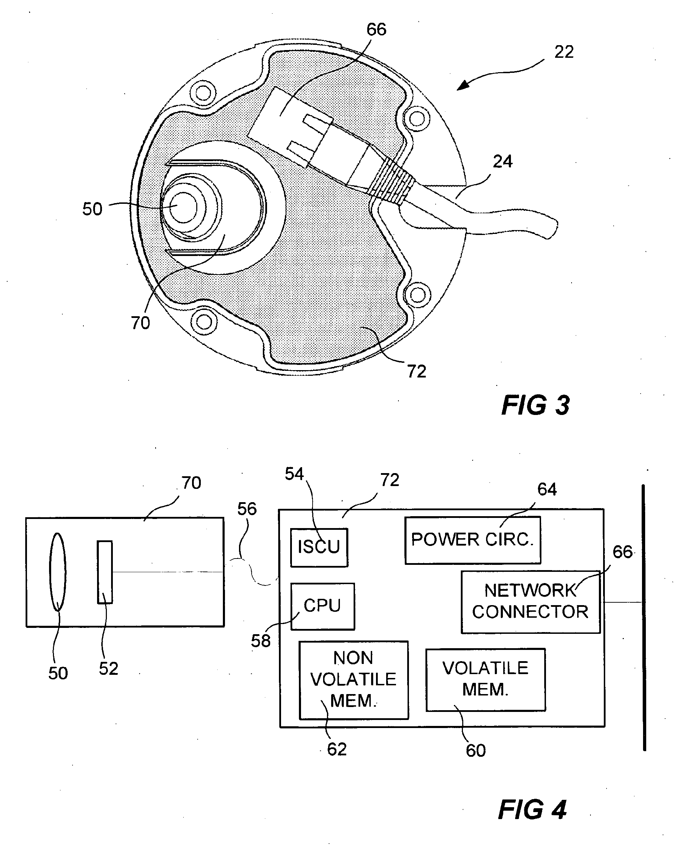

Additionally the surveillance camera 8 includes a base plate 22, as shown in Fig 2 and in Fig 3, which is essentially parallel with the top surface 14. The base plate 22 may be provided with a cable opening 24 enabling a connection of a network cable and if necessary a power cable within the camera housing 10. The cable opening 24 may alternatively be arranged in the side surface 16 of the camera housing 10 or alternatively may connectors, e.g. network and power connectors, be arranged in the side surface 16 of the camera housing 10.

Further, the surveillance camera 8 includes a lens 50, an image sensor 52, an ISCU (Image Sensor Control Unit) 54, flexible transmission medium 56, a CPU 58, at least a memory 60, 62 e.g. a volatile memory 60 and/or a non volatile memory 62, power circuitry 64, and a network connector 66, see Fig 4. The detailed functionality and interaction between these devices in order to capture and deliver images are well known to a person skilled in the art of surveillance cameras.

Now referring to Figs 3 and 4, according to the invention the surveillance camera includes one movable unit 70 and one stationary unit 72 wherein the movable unit 70 includes the lens 50 and the image sensor 52. The movable unit 70 is arranged in the opening of the camera housing 10 in order to receive incident light on the image sensor 52 via the transparent view port cover 12 and the lens 50. The movable unit 70 is turnable about at least a tilt axis in order to enable tilt of the lens 50. However, according to one embodiment the movable unit 70 is arranged to be turnable in any direction, e.g. like a ball joint.

The stationary unit 72 is a part of the base plate 22. The stationary unit 72 is covered by the camera housing and is not positioned in the opening covered by the transparent view port cover 12. The stationary unit 72 may include additional electronic devices and, according to the invention, includes other electronic devices than previously described necessary to implement a surveillance camera, in particular, it includes the ISCU 54, the CPU 58, the volatile memory 60, the non volatile memory 62, power circuitry 64, and
also may include the network connector 66. The network connector 66 may be a socket or a plug for connecting to the network. However, it may also be soldering points where the wires of the network cable are soldered to the circuit board. In such case the network socket or network plug may be attached to this cable at a distance from the surveillance camera.

The flexible transmission medium 56 is arranged to transfer data, e.g. image data, and control signals between the movable unit 70 and the stationary unit 72. The flexible transmission medium 56 may be a flexible cable or any other flexible connection known to the skilled person.

By arranging the movable unit 70 substantially in the plane of the base plate 22 and arranging the stationary unit 72 substantially in the same plane as the base plate 22 and next to the moveable unit 70 it is possible to minimize the height of the surveillance camera, i.e. minimize the distance from the surface onto which the surveillance camera is to be mounted and to the most protruding, in an orthogonal direction from the surface, portion of the surveillance camera.

According to one aspect of the invention the surveillance camera is powered by means of power over Ethernet, i.e. the power supply is provided via the network cable. However, in another embodiment the surveillance camera is powered via an ordinary power supply and connected directly to the power circuitry of the surveillance camera.

## Claims

1. Surveillance camera (8) comprising:
a camera housing (10), a transparent view port cover (12), one movable unit (70) and one stationary unit (72),
wherein the transparent view port cover (12) is arranged to cover an opening in the camera housing (10), is curved, and forms a part of a sphere, and wherein the movable unit (70) includes a lens (50) and an image sensor (52),
**characterized in that**
the stationary unit includes an image sensor control unit (54), a CPU (58) a memory (60,62) and power circuitry (64),
the camera housing (10) includes a top surface (14) and a side surface (16), the side surface (16) extends along a periphery (18) of the top surface (14) and is connected to the top surface (14),
wherein the surveillance camera comprises a base plate (22) which is essentially parallel with the top surface (14),
wherein the transparent view port cover (12) is asymmetrically arranged on the camera housing (10) at a distance from the centre of the camera housing (10) in a plane projection viewed from the top surface (14) of the surveillance camera, and is protruding over the top surface (14) of the camera housing (10),
wherein the movable unit (70) is arranged next to the stationary unit (72) substantially in the plane of the base plate and in the opening of the camera housing, in order to receive incident light via the transparent view port cover (12), and the stationary unit is also arranged substantially in the plane of the base plate,
wherein said opening in the camera housing (10) is partly arranged in the top surface (14) and partly in a portion of the side surface (16).

2. Surveillance camera (8) according to claim 1, wherein the movable unit (70) is arranged to be turnable in any direction.

3. Surveillance camera (8) according to any one of claims 1-2, wherein the side surface (16) is extending from said top surface (14) at an angle (α).

4. Surveillance camera (8) according to any one of claims 1-3,
wherein the lens (50) and the image sensor (52) are arranged in the opening in the camera housing (10) and are covered by the transparent view port cover (12).

5. Surveillance camera (8) according to any one of claims 1-4, further comprising a network connector (66),
wherein said network connector (66) is arranged within the camera housing (10), is arranged at a distance from the opening in the camera housing (10) and in a plane essentially parallel with the top surface (14), and is covered by the camera housing.

## Patentansprüche

1. Überwachungskamera (8), die Folgendes umfasst:
ein Kameragehäuse (10), eine transparente Sichtfensterabdeckung (12), eine bewegliche Einheit (70) und eine ortsfeste Einheit (72),
wobei die transparente Sichtfensterabdeckung (12) dafür ausgelegt ist, eine Öffnung in dem Kameragehäuse (10) zu bedecken, gekrümmt ist und einen Teil einer Kugel bildet, und wobei die bewegliche Einheit (70) eine Linse (50) und einen Bildsensor (52) enthält,
**dadurch gekennzeichnet, dass**
die ortsfeste Einheit eine Bildsensorsteuereinheit (54), eine CPU (58), einen Speicher (60,62) und Hauptstromkreise (64) enthält,
das Kameragehäuse (10) eine Oberseite (14) und eine Seitenfläche (16) enthält, wobei sich die Seitenfläche (16) entlang eines Umfangs (18) der Oberseite (14) erstreckt und mit der Oberseite (14) verbunden ist,
wobei die Überwachungskamera eine Grundplatte (22) umfasst, die im Wesentlichen parallel zu der Oberseite (14) verläuft,
wobei die transparente Sichtfensterabdeckung (12) asymmetrisch an dem Kameragehäuse (10) in einem Abstand zur Mitte des Kameragehäuses (10) in einer Ebenenprojektion, von der Oberseite (14) der Überwachungskamera aus gesehen, angeordnet ist und über die Oberseite (14) des Kameragehäuses (10) hinaus ragt,
wobei die bewegliche Einheit (70) neben der ortsfesten Einheit (72) im Wesentlichen in der Ebene der Grundplatte und in der Öffnung des Kameragehäuses angeordnet ist, um durch die transparente Sichtfensterabdeckung (12) einfallendes Licht zu empfangen, und die ortsfeste Einheit ebenfalls im Wesentlichen in der Ebene der Grundplatte angeordnet ist,
wobei die Öffnung in dem Kameragehäuse (10) teilweise in der Oberseite (14) und teilweise in einem Abschnitt der Seitenfläche (16) angeordnet ist.

2. Überwachungskamera (8) nach Anspruch 1, wobei die bewegliche Einheit (70) dafür ausgelegt ist, sich in jeder Richtung drehen zu können.

3. Überwachungskamera (8) nach einem der Ansprüche 1-2, wobei sich die Seitenfläche (16) von der Oberseite (14) in einem Winkel (α) erstreckt.

4. Überwachungskamera (8) nach einem der Ansprüche 1-3, wobei die Linse (50) und der Bildsensor (52) in der Öffnung in dem Kameragehäuse (10) angeordnet sind und von der transparenten Sichtfensterabdeckung (12) abgedeckt sind.

5. Überwachungskamera (8) nach einem der Ansprüche 1-4, die des Weiteren einen Netzwerkverbinder (66) umfasst,
wobei der Netzwerkverbinder (66) innerhalb des Kameragehäuses (10) angeordnet ist, in einem Abstand zu der Öffnung in dem Kameragehäuse (10) angeordnet ist und in einer Ebene angeordnet ist, die im Wesentlichen parallel zu der Oberseite (14) verläuft, und von dem Kameragehäuse abgedeckt ist.

## Revendications

1. Caméra de surveillance (8) comprenant :
un logement de caméra (10), un couvercle de hublot transparent (12), une unité mobile (70) et une unité immobile (72),
dans laquelle le couvercle de hublot transparent (12) est agencé pour couvrir une ouverture dans le logement de caméra (10), est incurvé, et forme une partie d'une sphère, et dans laquelle l'unité mobile (70) comprend une lentille (50) et un capteur d'images (52),
**caractérisée en ce que**
l'unité immobile comprend une unité de commande de capteur d'images (54), une CPU (58), une mémoire (60, 62) et un circuit d'alimentation électrique (64),
le logement de caméra (10) comprend une surface supérieure (14) et une surface latérale (16), la surface latérale (16) s'étendant le long d'une périphérie (18) de la surface supérieure (14) et étant liée à la surface supérieure (14),
dans laquelle la caméra de surveillance comprend un socle (22) qui est sensiblement parallèle à la surface supérieure (14),
dans laquelle le couvercle de hublot transparent (12) est agencé de manière asymétrique sur le logement de caméra (10) à une distance du centre du logement de caméra (10) dans une projection plane en vue depuis la surface supérieure (14) de la caméra de surveillance, et fait saillie au-dessus de la surface supérieure (14) du logement de caméra (10),
dans laquelle l'unité mobile (70) est agencée à côté de l'unité immobile (72) sensiblement dans le plan du socle et dans l'ouverture du logement de caméra, pour recevoir une lumière incidente à travers le couvercle de hublot transparent (12), et l'unité immobile est également agencée sensiblement dans le plan du socle,
dans laquelle ladite ouverture dans le logement de caméra (10) est agencée partiellement dans la surface supérieure (14) et partiellement dans une partie de la surface latérale (16).

2. Caméra de surveillance (8) selon la revendication 1, dans laquelle l'unité mobile (70) est agencée pour pouvoir être tournée dans n'importe quelle direction.

3. Caméra de surveillance (8) selon l'une quelconque des revendications 1 et 2, dans laquelle la surface latérale (16) s'étend de ladite surface supérieure (14) à un angle (α).

4. Caméra de surveillance (8) selon l'une quelconque des revendications 1 à 3,
dans laquelle la lentille (50) et le capteur d'images (52) sont agencés dans l'ouverture du logement de caméra (10) et sont couverts par le couvercle de hublot transparent (12).

5. Caméra de surveillance (8) selon l'une quelconque des revendications 1 à 4, comprenant en outre un connecteur de réseau (66),
dans laquelle ledit connecteur de réseau (66) est agencé à l'intérieur du logement de caméra (10), est agencé à une distance de l'ouverture du logement de caméra (10) et dans un plan sensiblement parallèle à la surface supérieure (14), et est couvert par le logement de caméra.
